# FASCICULE DE BREVET EUROPEEN

(11) **EP 0 344 045 B1**
(45) Date de publication et mention de la délivrance du brevet: **15.09.1993**
(21) Numéro de dépôt: 89401354.9
(22) Date de dépôt: 17.05.1989
(51) Int. Cl.: C08J 7/04, B32B 17/10

(54) **Couche de polyuréthane transparente résistant à la rayure et à l'abrasion et ayant les propriétés d'absorbeur d'énergie et d'anti-buée, procédé de fabrication et vitrages qui l'utilisent**
Durchsichtige, kratz- und abriebfeste Dunstbeständigkeit und energieabsorbierende Eigenschaften aufweisende Polyurethanschicht, Verfahren zu deren Herstellung sowie diese benutzendes laminiertes Glas
Scratch- and abrasion-proof transparent polyurethane layer having fume resistance and energy absorbing properties, process for its preparation and laminated glass using same

(30) Priorité: 20.05.1988 FR 8806779
(43) Date de publication de la demande: 29.11.1989
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Daude, Gérard, F-33140 Villenave d'Ornon (FR); Bravet, Jean-Louis, F-60150 Thourotte (FR)
(74) Mandataire: Muller, René

(56) Documents cités:
- EP-A- 0 098 961
- EP-A- 0 144 065
- FR-A- 2 148 192
- FR-A- 2 207 809
- FR-A- 2 574 395
- US-A- 4 039 720

## Description

L'invention concerne une couche de polyuréthane de haute qualité optique présentant des propriétés d'absorbeur d'énergie, de résistance à la rayure et à l'abrasion, et des propriétés anti-buée, pouvant être utilisée en tant que couche externe dans les vitrages de sécurité, en particulier les pare-brise.

On connait d'après la publication de brevet européen 0 133 090, une couche de polyuréthane formée dans un processus en continu par coulée réactive, sur un support plan horizontal duquel elle est détachable, d'un mélange réactionnel des composants d'un polyuréthane. Par coulée réactive, on entend dans ce domaine technique, une coulée pour former une couche ou un film à partir d'un mélange liquide des composants à l'état de monomères ou de prépolymères, suivie d'une polymérisation de ce mélange par la chaleur.

Le mélange réactionnel décrit dans le document cité comprend un composant à hydrogènes actifs notamment un composant polyol, et un composant isocyanate comprenant au moins un diisocyanate aliphatique, cycloaliphatique ou un prépolymère de diisocyanate, ce composant ayant une viscosité inférieure à environ 5 Pa.s à + 40°C. Le composant polyol comprend au moins un polyol long difonctionnel de masse moléculaire comprise entre 500 et 4000,au moins un diol court en tant qu'agent d'allongement de chaine et le cas échéant une faible proportion d'au moins an polyol de fonctionalité supécieure à deux et notamment des triols aliphatiques.

Les proportions entre le polyol long, le diol court et éventuellement le polyol de fonctionnalité supérieure à 2 sont généralement choisies telles que pour un équivalent hydroxyle, le polyol long représente environ de 0,30 à 0,45 équivalent, le diol court d'environ 0,2 à 0,7 équivalent et le polyol de fonctionnalité supérieure à 2 environ 0 à 0,35 équivalent. Dans ces conditions, la couche présente les caractéristiques mécaniques suivantes, mesurées suivant les normes AFNOR/NFT 46 002, 51 034, 54 108.
- une contrainte au seuil d'écoulement σ_{Y} à -20°C inférieure ou égale à 3 daN/mm²,
- une contrainte à la rupture σ_{R} à + 40°C supérieure ou égale à 2 daN/mm²,
- un allongement à la rupture ε_{R} à + 20°C compris entre 250 et 500 %,
- une résistance à la déchirure amorcée Ra à + 20°C supérieure ou égale à 9 daN/mm d'épaisseur.

Cette couche présente outre des propriétés d'absorbeur d'énergie, comme indiqués précédemment, des propriétés de résistance à la rayure et à l'abrasion la rendant apte à être utilisée comme couche externe dans certaines conditions. Ainsi, elle présente une résistance à la rayure supérieure à 20 grammes et une résistance à l'abrasion avec un écart de flou inférieur à 4 %, ces valeurs étant mesurées d'après les tests décrits dans la publication citée.

Cependant dans des conditions d'utilisations sévères, par exemple lorsqu'elle est utilise en tant que couche externe dans les vitrages de véhicule à moteur, et qu'elle est alors soumise à toutes sortes d'attaques et en particulier à l'attaque de certains produits de nettoyage contenant des solvants organiques agressifs, elle ne donne alors pas entière satisfaction, sa résistance à ces produits n'étant pas suffisante.

En outre, les couches de polyuréthane citées ci-dessus, associées à un support en verre ou en matière plastique, lorsqu'elles sont placées dans des conditions de forte humidité peuvent comme les vitrages en verre se recouvrir rapidement d'une buée qui nuit à la vision à travers le vitrage.

La publication de brevet FR-A-2 574 395 décrit une couche de revêtement en un polyuréthane thermodurcissable présentant des propriétés de surface et des propriétés anti-buée. Cette couche ne présente pas les propriétés d'absorbeur d'énergie lui permettant d'être utilisée en tant que mono couche associée à une feuille de verre dans un vitrage de sécurité telle un pare-brise de véhicule à moteur.

La publication de brevet FR-A-2 207 809 décrit une couche mince de surface formée à partir d'un copolymère renfermant des séquences alternées de polyuréthane et de polyacrylique. Ce type de couche ne peut présenter à la fois des propriétés d'absorbeur d'énergie, de résistance à la rayure et des propriétés anti-buée.

L'invention propose une couche de polyuréthane transparente, de haute qualité optique, utilisable en tant que couche externe dans un vitrage de sécurité, ayant des propriétés d'absorbeur d'énergie, des propriétés de surface telles que résistances à la rayure et à l'abrasion et des propriétés de résistance à la buée améliorées.

La couche de polyuréthane selon l'invention est formée par un dépôt sur un support par coulée réactive ou pulvérisation réactive d'un mélange réactionnel d'un composant isocyanate comprenant au moins un diisocyanate aliphatique, cycloaliphatique ou un prépolymère de diisocyanate, ce composant ayant une viscosité inférieure à environ 5 Pa.s à + 40°C et d'un composant polyol comprenant au moins un polyol long difonctionnel de masse moléculaire comprise entre 500 et 10000 et de préférence entre 1000 et 3000,comportant au moins en partie des segments d'oxyde d'éthylène et le cas échéant d'oxyde de propylène, le pourcentage pondéral de segment oxyde d'éthylène par rapport à la masse totale du polyuréthane étant au moins égal à 20 %, au moins un diol court en tant qu'agent d'allongement de chaine et le cas échéant une faible proportion d'au moins un polyol de fonctionnalité supérieure à deux, le rapport OH des groupements NCO libres du composant isocyanate aux groupements OH libres du composant polyol étant compris entre 1,5 et 2, et en ce que la surface destinée à être orientée vers l'extérieur du vitrage est traitée par mise en contact avec un composé de traitement de surface choisi parmi les dérivés acryliques et les isocyanates de fonctionnalité supérieure à 2.

Selon une caractéristique avantageuse de l'invention, la mise en contact de la face de la couche avec le composé de traitement de surface s'effectue au moment même de la fabrication de la couche à partir du mélange réactionnel. A cette fin, le mélange réactionnel est coulé ou pulvérisé sur le support de formation qui a été au préalable revêtu d'une couche mince d'un dérivé acrylique ou d'un isocyanate de fonctionnalité supérieure à deux. Après polymérisation de la couche, celle-ci est retirée du support et elle comporte sur sa face qui était au contact avec ledit support, le polymère acrylique ou le polymère à base d'isocyanate de fonctionnalité supérieure à deux.

Un procédé de fabrication de la couche selon l'invention consiste donc à former sur un support notamment un support plan horizontal que l'on revêt au préalable d'un agent de séparation, un mince revêtement à base de monomères ou prépolymères acryliques, ou de polymères acryliques porteurs de groupes hydroxyles libres, ou d'isocyanates de fonctionnalité supérieure à deux, puis à déposer sur ledit revêtement le mélange réactionnel des composants apte à former la couche de polyuréthane, à faire subir à l'ensemble un cycle de polymérisation durant lequel s'effectue la polymérisation des acryliques ou des isocyanates ainsi que la polymérisation de la couche de polyuréthane, en présence d'un amorceur de polymérisation dans le cas des acryliques, puis à retirer du support la couche de polyuréthane associée superficiellement au polymère acrylique ou issu des isocyanates de fonctionnalité supérieure à deux.

Les monomères et/ou prépolymères acrylique utilisés pour former la couche mince de revêtement sur le support de coulée sont choisis notamment parmi les acrylates et méthacrylates, les polyacrylates et polyméthacrylates de faible poids moléculaire, par exemple le méthacrylate d'isobutyle, le diacrylate de dipropylèneglycol, le diacrylate de triéthylèneglycol, le diacrylate d'hexanediol-1,6, le diacrylate de butanediol-1,4.

Lorsque le revêtement est formé à partir de polymères acryliques porteurs de groupes hydroxyles libres, on choisit notamment des résines méthacryliques telles du méthacrylate à indice d'hydroxyle inférieur à 100. Lorsqu'on utilise des résines méthacryliques à indice d'hydroxyle supérieur à 100, on obtient des surfaces dures, résistantes chimiquement, mais rayables. L'indice d'hydroxyle est la quantité de potasse en mg, nécessaire à la neutralisation des hydroxyles libres de 1 g de substance.

On choisi de préférence un dérivé acrylique visqueux qui n'a pas tendance à être chassé du support lors de la coulée du mélange réactionnel.

L'amorceur de polymérisation des acryliques par voie thermique est par exemple le peroxyde de benzoyle, les perbenzoates d'alkyle, l'azo-bis-isobutyronitrile ou d'autres amorceurs connus. On l'utilise à raison d'environ 0,5 à 5 % en poids du composé acrylique.

La couche mince ou pellicule de revêtement est avantageusement formée sur le support plan horizontal par dépôt d'une solution des monomères et/ou prépolymères acryliques, ou des polymères acryliques porteurs de groupes hydroxyles libres, suivi d'une évaporation des solvants.

Les solvants convenables sont par exemple des hydrocarbures simples, des hydrocarbures halogénés, des cétones.

Lorsque le traitement de surface est réalisé à l'aide d'isocyanate de fonctionalité supérieure à 2, on peut utiliser avec avantage un triisocyanate tel un biuret d'isocyanate ou un triisocyanurate, ou un trimère d'isocyanate, par exemple un biuret, un isocyanurate ou le trimère de l'hexaméthylènediisocyanate. On choisi ici également de préférence un dérivé isocyanate visqueux.

Les composants aptes à former la couche de polyuréthane ayant des propriétés anti-buée selon l'invention sont décrit ci-après :
Les diisocyanates convenables utilisés dans le cadre de l'invention sont choisis notamment parmi les isocyanates difonctionnels aliphatiques suivants : hexaméthylènediisocyanate (HMDI), 2,2,4-triméthyl1,6-hexanediisocyanate (TMDI), bis 4-isocyanatocyclohexylméthane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m-et p-tétraméthylxylylènediisocyanate (m- et p- TMXDI), cis et transcyclohexane-1,4 diisocyanate (CHDI), 1,3 -(diisocyanatométhyl) cyclohexane (XDI hydrogéné).

On peut utiliser un composant isocyanate contenant des fonctions urées. Ces fonctions urées améliorent certaines propriétés mécaniques de la couche. Le taux d'urée peut représenter jusqu'à environ 10 % du poids total du composant isocyanate à fonctions urées. De préférence le taux d'urée est compris entre 5 et 7 % du poids total dudit composant. Pour la raison invoquée précédemment on utilise de préférence du 3-isocyanatométhyl-3,5,5 triméthylcyclohexyldiisocyanate comportant des fonctions urées (IPDI et dérivés).

Le polyol long comportant des segments d'oxyde d'éthylène et le cas échéant d'oxyde de propylène peut être un polyol de masse moléculaire comprise entre 500 et 10000. La teneur en segments oxyde d'éthylène est généralement supérieure à 40 % en poids pour satisfaire à la condition énoncée précédemment, à savoir, former un polyuréthane ayant une teneur en segment oxyde d'éthylène d'au moins 20 % en poids. Des polyols convenables sont par exemple des polyols commercialisés sous l'appellation SYNPERONIC par la société ICI, des polyglycols à segments oxyde d'éthylène commercialisés par la société HOECHST, par exemple le produit P 41-300 de masse moléculaire d'environ 5000, qui comporte 80 % en poids de segments oxyde d'éthylène.

Les polyols préférés pour l'obtention des propriétés mécaniques recherchées sont ceux présentant une masse moléculaire comprise entre 1000 et 3000. Lorsque la masse moléculaire est supérieure à 3000, il est généralement nécessaire d'utiliser un rapport NCO/OH plus important pour conserver des propriétés mécaniques satisfaisantes.

Le polyol long comportant des segments d'oxyde d'éthylène et le cas échéant d'oxyde de propylène peut être aussi un polyétherpolyol sulfoné, en particulier un éther polyoxyalcoylénique de formule :

R₁CH₂O - (C₂H₄O-)ₙ(C₃H₆O-)ₘCH₂CHR₃-CH₂-SO₃X

avec 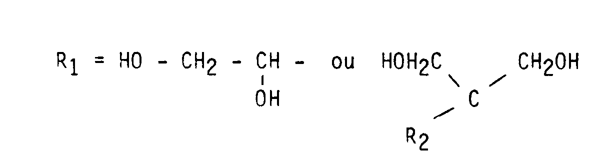
avec
- R₂ =: CH₃, C₂H₅, C₃H₇
- R₃ =: H, CH₃
- X =: H, ion alcalin ou ammonium
- n =: 0 à 100
- m =: 0 à 30
- n +: m ≧ 1
ayant un poids moléculaire d'environ 500 à 10000.

Les agents d'allongement de chaines convenables sont des diols courts de masse moléculaire inférieure à environ 300 et de préférence inférieure à 150, tels que les : éthylèneglycol, propanediol-1,2, propanediol-1,3, butanediol-1,2, -1,3, -1,4, diméthyl-2,2 propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol- 2,4, éthyl- 2 hexanediol-1,3, triméthyl-2,2,4-pentanediol-1,3, diéthylèneglycol, triéthylèneglycol, tétraéthylèneglycol, butyne-2-diol-1,4,butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolproponique. En général plus le diol est court plus la couche est dure.

On utilise de préférence le butanediol-1,4 qui est un bon compromis pour l'obtention d'une couche ni trop dure, ni trop souple.

Le composant polyol peut contenir une faible proportion d'au moins un polyol de fonctionnalité supérieure à deux et notamment des triols aliphatiques monomères tels le glycérol, le triméthylolpropane, des triols à chaines polyéther, des triols de polycaprolactone, la masse moléculaire de ces triols étant généralement comprise entre 90 et 1000, les polyols mixtes polyéther/polyester de fonctionnalité supérieure à 2, par exemple de fonctionnalité comprise entre 2 et 3. L'ajout d'un polyol de fonctionnalité supérieure à 2 provoque des liaisons de pontage supplémentaires entre les chaines du polyuréthane et peut ainsi encore améliorer la cohésion de la couche. On utilise de préférence un polyol de fonctionnalité supérieure à 2, présentant un caractère hydrophile.

Les proportions entre le polyol long, le diol court et éventuellement le polyol de fonctionnalité supérieure à 2 peuvent varier selon les propriétés désirées. On choisit généralement des proportions telles que pour un équivalent hydroxyle le polyol long représente environ de 0,30 à 0,45 équivalent, le diol court d'environ 0,2 à 0,7 équivalent et le polyol de fonctionnalité supérieure à 2 environ 0 à 0,35 équivalent.

On peut encore réaliser la couche en remplaçant une partie du composant polyol par un produit à hydrogènes actifs différents tel une amine.

Suivant une réalisation de la couche de matière plastique, le composant isocyanate peut contenir dans des proportions limitées, par exemple inférieures à environ 15 % en équivalent NCO, au moins un triisocyanate tels un biuret d'isocyanate ou un triisocyanurate.

Les composants sont pris en quantité telle que le rapport entre les groupements NCO libres du composant isocyanate et les groupements OH libres du composant polyol varie entre 1,5 et 2 et de préférence entre 1,7 et 1,9. Lorsque le rapport NCO/OH est inférieur à 1,5, les propriétés mécaniques de la couche formée ne sont pas satisfaisantes. Lorsque le rapport NCO/OH est supérieur à 2, le large excès de NCO peut entrainer des problèmes de toxicité et en outre le prix de revient de la couche est plus élevé. Un rapport compris entre 1,7 et 1,9 est un bon compromis pour l'obtention de la couche désirée.

Dans une variante de l'invention la couche de polyuréthane ayant les propriétés désirées est obtenue en deux étapes : une première étape consistant à former la couche de polyuréthane sur un support de formation et après formation de la couche, sa séparation de son support et son assemblage éventuel avec un substrat tel une feuille de verre pour former le vitrage, une deuxième étape consistant à "traiter" la face libre par le composé de traitement de surface, acrylique ou isocyanate, par trempage dans un bain d'une solution dudit composé de traitement acrylique ou un isocyanate de fonctionnalité supérieure à deux notamment un triisocyanate, suivi d'un égouttage et d'une polymérisation du composé acrylique ou du composé d'isocyanate.

Selon une caractéristique préférée de l'invention, la pellicule de revêtement du composé de traitement présente une épaisseur inférieure à 20 microns et de préférence inférieure à 10 microns.

D'autres avantages et caractéristiques de l'invention apparaitront dans la description suivante d'exemples de fabrication d'une couche de polyuréthane présentant des propriétés d'absorbeur d'énergie, d'anti-buée et de surface améliorées.

### EXEMPLE 1

Sur un support en verre mobile défilant de manière continue, revêtu d'un agent de séparation qui est un produit d'addition modifié d'éthylène oxyde, on dépose à l'aide d'un rouleau une solution de composition suivante :
- 1000 parties de diacrylate d'hexanediol
- 1500 parties d'acétone
- 25 parties d'azo-bis-isobutyronitrile en tant qu'amorceur pour la polymérisation par la chaleur des monomères acryliques.

On sèche à 60° pendant environ 2 minutes et on obtient une pellicule d'environ 2 microns d'épaisseur.

Pour fabriquer la couche de polyuréthane, on prépare au préalable le composant polyol en mélangeant un polyol long qui est un copolymère comprenant des segments oxyde d'éthylène à raison de 57 % en poids et des segments oxyde de propylène, de masse moléculaire 1900 (par exemple le produit commercialisé sous l'appellation SYNPERONIC L35 par la société ICI), avec du butanediol-1,4 et un polyol de fonctionalité supérieure à 2 (par exemple un triol commercialisé sous l'appellation Desmophen 1100 par la société BAYER), les proportions des constituants étant telles que le copolymère polyol apporte 0,35 équivalent en groupes hydroxyles alors que le butanediol-1,4 en apporte 0,50 et que le polyol de fonctionalité supérieur à 2 en apporte 0,15.

Au composant polyol on incorpore un stabilisant à raison de 0,5 % en poids de la masse totale du composant polyol et du composant isocyanate, un agent nappant à raison de 0,05 % en poids calculé de la même façon et un catalyseur à savoir du dilaurate de dibutylétain à raison de 0,03 % en poids calculé de la même façon que précédemment.

Le composant isocyanate utilisé est du 3-isocyanatométhyl-3,5,5-triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1,8.

Après dégazage sous vide des composants, le mélange porté à environ 40°C est coulé à l'aide d'une tête de coulée comme celle décrite dans la publication de brevet français 2 347 170, sur la pellicule acrylique formée précédemment. On forme ainsi une couche d'environ 0,70 mm d'épaisseur qui est soumise à un cycle de polymérisation consistant en 2 heures de chauffage à 120°C environ.

Au cours de ce cycle se produit également la polymérisation du diacrylate d'hexanediol pour former un polymère acrylique.

On retire alors du support, la couche de polyuréthane qui porte le revêtement acrylique.

Cette feuille obtenue peut être assemblée avec une feuille de verre recuite ou trempée pour former un vitrage de sécurité, l'assemblage s'effectuant en disposant la face de la couche de polyuréthane revêtue du revêtement acrylique à l'extérieur par rapport à la feuille de verre.

La feuille obtenue et le vitrage qui l'utilise sont soumis à des essais décrits par la suite.

### EXEMPLE 2

On opère de la même façon que dans l'exemple 1 sauf qu'on remplace le diacrylate d'hexanediol par le diacrylate de butanediol dans la composition acrylique tout en conservant les mêmes proportions.

La feuille de matière plastique obtenue après polymérisation se détache aisément du support de coulée.

### EXEMPLE 3

Sur un support en verre mobile défilant de manière continue, revêtu d'un agent de séparation qui est un produit d'addition modifié d'éthylène oxyde, on dépose à l'aide d'un rouleau une solution à 10 % dans de la méthyléthylcétone d'une résine méthacrylique (méthacrylate), présentant un indice d'hydroxyle I_{OH} de 50 et un extrait sec de 60 % dans un mélange de 4 parties de xylène pour 1 partie d'acétate de butyle (résine méthacrylique commercialisée sous l'appellation DEGALAN VPLS 50 par la société allemande DEGUSSA), la solution déposée contenant à raison de 2,5 % en poids de l'extrait sec de la résine de l'azo-bis-isobutynonitrile en tant qu'amorceur thermique.

On sèche à 120°C pendant 20 minutes et on obtient une pellicule d'environ 1 micron d'épaisseur.

On opère ensuite comme dans l'exemple 1 pour former la couche de polyuréthane sur la pellicule acrylique.

### EXEMPLE 4

On opère comme dans l'exemple 3, sauf qu'on remplace la résine méthacrylique à indice d'hydroxyle I_{OH} de 50 par une résine méthacrylique à indice d'hydroxyle I_{OH} de 73, par exemple la résine commercialisée sous l'appellation DEGALAN VPLS 73, par la société DEGUSSA).

### EXEMPLES 5 A 8

On opère de la même façon que dans les exemples 1 à 4, sauf qu'on modifie le rapport entre les polyols du composant polyol en utilisant respectivement 0,35, 0,45 et 0,20 équivalent OH pour le polyol comprenant les segments oxyde d'éthylène et oxyde de propylène, le butanediol-1,4, le polyol de fonctionalité supérieure à 2 étant un polycaprolactonetriol (par exemple le produit commercialisé sous l'appellation NIAX 301 par la société UNION CARBIDE).

### EXEMPLE 9 ET 10

On opère comme dans l'exemple 1, sauf qu'on modifie le rapport NCO/OH en prenant respectivement un rapport NCO/OH égal à 1,5 et à 2,0.

### EXEMPLE 11

On opère comme dans l'exemple 1 sauf qu'on forme sur le support de coulée, non plus une pellicule acrylique mais une pellicule de 2 microns d'épaisseur de triisocyanate (par exemple le produit commercialisé sous l'appellation TOLONATE HDT par la société RHONE-POULENC).

### EXEMPLE 12

On opère de la même façon que dans l'exemple 1 pour former la couche de polyuréthane sauf qu'on coule directement le mélange réactionnel des composants sur le support de coulée revêtu de l'agent de séparation, donc sans avoir formé au préalable une couche de revêtement acrylique.

Après polymérisation, la couche de polyuréthane est détachée du support et elle est assemblée avec une feuille de verre.

L'assemblage feuille de verre-couche de polyuréthane est plongé dans une solution à 10 % dans la méthyléthylcétone d'une résine méthacrylique présentant un indice d'hydroxyle IOH de 50 avec un extrait sec de 60 % dans un mélange de 4 parties de xylène pour 1 partie d'acétate de butyle, la solution contenant en outre un amorceur pour la polymérisation photochimique de la résine méthacrylique.

La durée du trempage est de 1 minute, après quoi le vitrage est rincé avec de la méthyléthylcétone et l'assemblage est séché à 10 mn à 60°C puis la face du vitrage portant la couche de polyuréthane est irradiée pendant 90 secondes par une lampe UV de 400 watts.

### EXEMPLE 13

On opère comme dans l'exemple 1, sauf qu'on remplace le copolymère à segments oxyde d'éthylène et oxyde de propylène de masse moléculaire 1900 par un copolymère de la même famille mais de masse moléculaire 2200, comportant 47 % en poids d'oxyde d'éthylène (par exemple le produit commercialisé sous l'appellation SYNPERONIC L44 par la société ICI).

### EXEMPLE 14

On opère comme dans l'exemple 1, sauf qu'on remplace le copolymère à segments oxyde d'éthylène et oxyde de propylène par un polyétherpolyol sulfoné difonctionnel comportant des segments oxyde d'éthylène de poids moléculaire voisin de 1000 g environ et à 100 % en poids de segment oxyde d'éthylène dans la chaine et contenant de plus un groupe SO₃-Na+ terminal.

### EXEMPLE TEMOIN 1

On opère comme dans l'exemple 1, sauf qu'on coule directement le mélange réactionnel des composants sur le support de coulée revêtu de l'agent de séparation, sans avoir formé au préalable une pellicule acrylique.

### EXEMPLE TEMOIN 2

On opère comme dans l'exemple 1, sauf qu'on utilise un rapport NCO/OH égal à 1.

### EXEMPLE TEMOIN 3

On opère comme dans l'exemple 1, sauf qu'on forme sur le support de coulée un revêtement acrylique de 20 microns d'épaisseur.

### EXEMPLE TEMOIN 4

On opère comme dans l'exemple 1, sauf qu'on remplace le copolymère à segments oxyde d'éthylène et oxyde de propylène par un autre copolymère présentant une masse moléculaire 1630 et comprenant seulement 25 % en poids de segments oxyde d'éthylène.

Les couches de polyuréthanes obtenues d'après les exemples sont soumis à des tests d'abrasion.

Un des tests d'abrasion est un test d'usométrie utilisé généralement pour mesurer la résistance de papiers à l'usure.

On place un échantillon de 12 centimètres de diamètre obtenu selon les exemples sur un plateau tournant et on applique sur la face à tester de l'échantillon, c'est-à-dire la face traitée par le revêtement acrylique ou isocyanate, un tissu en coton avec un poids d'appui de 1 kg. On fait effectué 1000 tours à l'échantillon. Celui-ci est alors retiré de l'appareil et on observe son état de surface et sa transparence.

Un autre test d'usométrie mettant en évidence la résistance à l'abrasion de la couche par les solvants consiste à imbiber l'échantillon par de la cyclohexanone et à lui faire subir 500 tours comme dans le test précédent.

Les résultats de ces tests d'abrasion sont contenus dans le tableau suivant. L'aspect de l'échantillon est noté :
- bon : lorsque la transparence de l'échantillon n'a pas été affectée par le test ;
- moyen : lorsqu'on observe un léger trouble ;
- mauvais : lorsque l'échantillon est rayé et qu'il a perdu sa transparence.

| EXEMPLES | ASPECT DE L'ENCHANTILLON APRES 1000 TOURS A SEC | ASPECT DE L'ECHANTILLON APRES 500 TOURS EN PRESENCE DE CYCLOHEXANONE |
|---|---|---|
| 1 | BON | BON |
| 2 | BON | BON |
| 3 | BON | BON |
| 4 | BON | BON |
| 5 | BON | BON |
| 6 | BON | BON |
| 7 | BON | BON |
| 8 | BON | BON |
| 9 | BON | BON |
| 10 | BON | BON |
| 11 | BON | BON |
| 12 | MOYEN | MOYEN |
| 13 | BON | BON |
| 14 | BON | BON |
| TEMOIN 1 | MAUVAIS | MOYEN |
| TEMOIN 2 | BON | BON |
| TEMOIN 3 | MAUVAIS | MAUVAIS |
| TEMOIN 4 | BON | BON |

Pour l'évaluation de l'effet anti-buée on applique un procédé tel qu'il est décrit dans la norme DIN 4648, partie 8, sauf que la température de l'eau est réglée à 40°C par voie thermostatique. On prend comme mesure du comportement à la condensation, la durée qui s'écoule jusqu'à ce qu'un début de condensation sur l'éprouvette soit perceptible à l'oeil nu (délai d'apparition de l'embuage). Avec les couches de revêtement en polyuréthane connues généralement, un début de condensation est perceptible immédiatement après l'introduction de l'éprouvette dans l'appareil de mesure.

Le délai d'apparition de l'embuage est supérieur à 5 minutes pour tous les exemples selon l'invention (1 à 14). L'apparition de l'embuage est plus rapide pour l'exemple témoin 4.

Les propriétés mécaniques de la couche de polyuréthane obtenues dans les exemples 1 à 14 sont suffisantes pour lui conférer des propriétés d' absorbeur d'énergie.

Les résultats des tests montrent que la couche de polyuréthane obtenue par coulée réactive sur un support préalablement revêtu par un revêtement acrylique ou à base d'isocyanate de fonctionalité supérieure à 2, de faible épaisseur, présente une très bonne résistance à l'abrasion et des propriétés anti-buée.

Les propriétés mécaniques de la couche de l'exemple témoin 2 sont insuffisantes.

Lorsque le revêtement est trop épais, la résistance à l'abrasion est au contraire diminuée par rapport à la résistance présentée par une couche non traitée.

Lorsque le revêtement est effectué par trempage de la couche de matière plastique déjà polymérisé dans un bain acrylique, l' amélioration de la résistance à l'abrasion est moindre, et on observe une détérioration de la qualité optique.

La couche de polyuréthane selon l'invention, associée ou non à une ou plusieurs couches de matière plastique est avantageusement utilisée en tant que couche externe d'un vitrage feuilleté comprenant un support en verre ou en matière plastique, la face "traitée" de la couche étant orientée vers l'extérieur du vitrage.

## Revendications

1. Couche de polyuréthane transparente de haute qualité optique utilisable dans les vitrages de sécurité en tant que couche externe, ayant des propriétés d'absorbeur d'énergie, des propriétés de résistance à la rayure et à l'abrasion améliorées par traitement de surface et des propriétés de résistance à la buée améliorées, caractérisée en ce qu'elle est formée par dépôt sur un support, par coulée réactive ou pulvérisation réactive d'un mélange réactionnel d'un composant isocyanate, comprenant au moins un diisocyanate aliphatique, cycloaliphatique, ou un prépolymère de diisocyanate et d'un composant polyol comprenant au moins un polyol long difonctionnel de masse moléculaire comprise entre 500 et 10000 comportant au moins en partie des segments oxyde d'éthylène, le pourcentage pondéral de segment oxyde d'éthylène par rapport à la masse totale du polyuréthane étant supérieur à 20 %, au moins un diol court en tant qu'agent d'allongement de chaine, le rapport des groupements NCO libres du composant isocyanate aux groupements OH libres du composant polyol étant compris entre 1,5 et 2, et en ce que la face destinée à être orientée vers l'extérieur du vitrage est traitée par une mise en contact de la face avec un composé de traitement de surface choisi parmi les dérivés acryliques et les isocyanates de fonctionnalité supérieure à 2.

2. Couche de polyuréthane selon la revendication 1, caractérisée en ce que la mise en contact avec le composé de traitement de surface s'effectue par apport du mélange réactionnel sur le support préalablement revêtu du composé de traitement sous forme d'une pellicule mince et en ce que l'ensemble est soumis à un cycle de polymérisation.

3. Couche de polyuréthane selon la revendication 1, caractérisée en ce qu'on forme la couche de polyuréthane par apport sur le support du mélange réactionnel puis après polymérisation qu'on traite ultérieurement une des faces par le composé de traitement de surface par un trempage suivi d'une polymérisation dudit composé.

4. Couche de polyuréthane selon une des revendications 1 à 3, caractérisée en ce que le polyol long présentant des segments oxydes d'éthylène a une masse moléculaire comprise entre 1000 et 3000.

5. Couche selon l'une des revendications 1 à 4, caractérisée en ce que le rapport NCO/OH est compris entre 1,7 et 1,9.

6. Couche selon une des revendications 1 à 5, caractérisée en ce que le polyol long comportant des segments oxyde d'éthylène est un copolymère comportant des segments oxyde d'éthylène et des segments oxyde de propylène.

7. Couche selon une des revendications 1 à 6, caractérisée en ce que la teneur du polyol long en segments oxyde d'éthylène est supérieure à 40 % en poids.

8. Couche selon la revendication 6 ou 7, caractérisée en ce que le polyol long est un polyétherpolyol sulfoné.

9. Couche selon une des revendications 1 à 8, caractérisée en ce que le composant polyol comprend en outre un polyol de fonctionnalité supérieure à 2, de préférence un triol hydrophile.

10. Couche selon une des revendications 1 à 9, caractérisée en ce que les composés de traitement de surface sont choisis parmi les acrylates et méthacrylates, les polyacrylates et polyméthacrylates de faible poids moléculaire, les polymères acryliques porteurs de groupes hydroxyles libres les isocyanates de fonctionnalité supérieure à 2, les biurets d'isocyanates, les isocyanurates, les triisocyanates trimères.

11. Couche selon la revendication 10, caractérisée en ce que le triisocyanate est choisi parmi le biuret, l'isocyanurate, le trimère de l'hexaméthylènediisocyanate.

12. Couche selon une des revendications 2 à 11, caractérisée en ce que la pellicule de revêtement du composé de traitement présente une épaisseur inférieure à 20 microns et de préférence inférieure à 10 microns.

13. Procédé pour la fabrication d'une couche de polyuréthane selon la revendication 2, caractérisé en ce qu'on forme sur un support préalablement revêtu d'un agent de séparation, un mince revêtement à base de monomères ou prépolymères acryliques, ou de polymères acryliques porteurs de groupes hydroxyles libres, ou d'isocyanate de fonctionnalité supérieure à 2,
- on dépose sur le revêtement le mélange réactionnel des composants aptes à former la couche de polyuréthane, on fait subir à l'ensemble un cycle de polymérisation,
- on sépare la couche du support de formation.

14. Vitrage de sécurité, caractérisé en ce qu'il comprend une couche de polyuréthane en tant que couche externe selon une des revendications 1 à 12.

## Claims

1. Film of transparent polyurethane of high optical quality, capable of use in safety panes as external film, having energy-absorber properties, properties of scratch-resistance and abrasion-resistance improved by surface treatment and improved antimisting properties, characterized in that the film is formed by deposition onto a support, by reactive casting or reactive sputtering, of a reaction mixture of an isocyanate component comprising at least one aliphatic or cycloaliphatic diisocyanate or a diisocyanate prepolymer and of a polyol component comprising at least one difunctional long polyol of molecular mass between 500 and 10,000, comprising at least partly segments of ethylene oxide, the percentage by weight of ethylene oxide segments relative to the total mass of the polyurethane being greater than 20%, at least one short diol as chain lengthening agent, the ratio of the free NCO groups of the isocyanate component to the free OH groups of the polyol component being from 1.5 to 2, and in that the face intended to be orientated towards the outside of the pane is treated by bringing the face into contact with a surface treatment compound chosen from among the acrylic derivatives and the isocyanates of functionality greater than 2.

2. Polyurethane film according to Claim 1, characterized in that the contacting with the surface treatment compound is carried out by application of the reaction mixture onto the support previously coated with the treatment compound in the form of a thin skin, and in that the assembly is subjected to a polymerisation cycle.

3. Polyurethane film according to Claim 1, characterized in that the polyurethane film is formed by application onto the support of the reaction mixture and then, after polymerisation, that one of the faces is later treated with the surface treatment compound by dipping followed by a polymerisation of said compound.

4. Polyurethane film according to one of Claims 1 to 3, characterized in that the long polyol having ethylene oxide segments has a molecular mass of from 1,000 to 3,000.

5. Film according to one or Claims 1 to 4, characterized in that the NCO/OH ratio is from 1.7 to 1.9.

6. Film according to one of Claims 1 to 5, characterized in that the long polyol comprising ethylene oxide segments is a copolymer containing ethylene oxide segments and propylene oxide segments.

7. Film according to one of Claims 1 to 6, characterized in that the content of ethylene oxide segments in the long polyol is greater than 40% by weight.

8. Film according to Claim 6 or 7, characterized in that the long polyol is a sulphonated polyether polyol.

9. Film according to one of Claims 1 to 8, characterized in that the polyol component comprises, in addition, a polyol having a functionality greater than 2, preferably a hydrophilic triol.

10. Film according to one of Claims 1 to 9, characterized in that the surface treatment compounds are chosen from among the acrylates acid methacrylates, the polyacrylates and polymethacrylates of low molecular weight, the acrylic polymers carrying free hydroxyl groups, the isocyanates having a functionality greater than 2, the isocyanate biurets, the isocyanurates, and the trimeric triisocyanates.

11. Film according to Claim 10, characterized in that the triisocyanate is chosen from among the biuret, the isocyanurate, and the trimer of hexamethylenediisocyanate.

12. Film according to one of Claims 2 to 11, characterized in that the covering skin of the treatment compound has a thickness less than 20 microns and preferably less than 10 microns.

13. Method of production of a polyurethane film according to Claim 2, characterized in that there is formed, on a support previously coated with a parting agent, a thin coating based upon acrylic monomers or prepolymers, or upon acrylic polymers carrying free hydroxyl groups, or upon isocyanates having a functionality greater than 2,
- onto the coating there is deposited the reaction mixture of the components suitable for forming the polyurethane film, the whole assembly is subjected to a polymerisation cycle,
- and the film is separated from the shaping support.

14. Safety pane, characterized in that it comprises a polyurethane film as external film according to one of Claims 1 to 12.

## Patentansprüche

1. Durchsichtige Polyurethanschicht mit sehr guten optischen Eigenschaften, welche für Sicherheitsverglasungen als Außenschicht verwendbar ist und Energieabsorptions-Kratsbeständigkeits- und verbesserte Abriebseigenschaften durch Oberflächenbehandlung und eine verbesserte Wasserdampfbeständigkeit aufweist, **dadurch gekennzeichnet**, daß sie durch Abscheiden auf einem Trägermaterial mittels Reaktionsgießen oder -versprühen eines Reaktionsgemischs aus einer Isocyanatkomponente, die wenigstens ein aliphatisches oder cycloaliphatisches Diisocyanat oder ein Diisocyanatpräpolymer enthält, und aus einer Polyolkomponente hergestellt ist, die wenigstens ein langes bifunktionelles Polyol mit einer Molmasse zwischen 500 und 10000, das wenigstens teilweise Ethylenoxidsegmente umfaßt, wobei der prozentuale Gewichtsanteil der Ethylenoxidsegmente, bezogen auf das Gesamtgewicht des Polyurethans höher als 20 % ist, und wenigstens ein kurzes Diol als Kettenverlängerungsmittel enthält, das Verhältnis der freien NCO-Gruppen der Isocyanatkomponente zu den freien OH-Gruppen der Polyolkomponente zwischen 1,5 und 2 liegt und daß die gegen die Außenseite der Verglasung gerichtete Fläche durch In-Berührung-Bringen mit einem Oberflächenbehandlungsmittel behandelt wird, welches aus dem Acrylderivaten und den Isocyanaten mit einer Funktionalität von größer als zwei ausgewählt ist.

2. Polyurethanschicht nach Anspruch 1, **durch gekennzeichnet**, daß das In-Berührung-Bringen mit dem Oberflächenbehandlungsmittel durch Aufbringen des Reaktionsgemischs auf das zuvor mit dem Behandlungsmittel in Form einer dünnen Folie beschichtete Trägermaterial erfolgt und daß diese Einheit einem Polymerisationszyklus unterworfen wird.

3. Polyurethanschicht nach Anspruch 1, **dadurch gekennzeichnet**, daß sie durch Auftragen des Reaktionsgemischs auf das Trägermaterial hergestellt wird und daß nach der Polymerisation eine der Flächen anschließend mit dem Oberflächenbehandlungsmittel durch Abschrecken, gefolgt von einer Polymerisation dieses Mittels, behandelt wird.

4. Polyurethanschicht nach einem der Ansprüche 1 bis 3, **dadurch gekennzeichnet**, daß das langkettige Polyol Ethylenoxidsegmente mit einer Molmasse zwischen 1000 und 3000 aufweist.

5. Schicht nach einem der Ansprüche 1 bis 4, **durch gekennzeichnet**, daß das Verhältnis von NCO/OH zwischen 1,7 und 1,9 liegt.

6. Schicht nach einem der Ansprüche 1 bis 5, **dadurch gekennzeichnet**, daß das Ethylenoxidsegmente umfassende langkettige Polyol ein Copolymer ist, das Ethylenoxid- und Propylenoxidsegmente enthält.

7. Schicht nach einem der Ansprüche 1 bis 6, **dadurch gekennzeichnet**, daß der Anteil an Ethylenoxidsegmenten im Polyol mehr als 40 Gewichtsprozent beträgt.

8. Schicht nach Anspruch 6 oder 7, **dadurch gekennzeichnet**, daß das langkettige Polyol ein sulfoniertes Polyetherpolyol ist.

9. Schicht nach einem der Ansprüche 1 bis 8, **dadurch gekennzeichnet**, daß die Polyolkomponente außerdem ein wenigstens trifunktionelles Polyol und vorzugsweise ein hydrophyles Triol enthält.

10. Schicht nach einem der Ansprüche 1 bis 9, **dadurch gekennzeichnet**, daß die Oberflächenbehandlungsmittel aus den Acrylaten und Methalcrylaten, den Polyacrylaten und Polymethacrylaten mit nieriger Molmasse, den freie Hydroxylgruppen tragenden Acrylpolymeren, den wengistens trifunktionellen Isocyanaten, den Isocyanatbiureten, den Isocyanocyanaten und den trimeren Triisocyanaten ausgewählt sind.

11. Schicht nach Anspruch 10, **dadurch gekennzeichnet**, daß das Triisocyanat aus Biuret, Isocyanocyanat und Hexamethylendiisocyanattrimerem ausgewählt ist.

12. Schicht nach einem der Ansprüche 2 bis 11, **dadurch gekennzeichnet**, daß die Beschichtungsfolie des Behandlungsmittels eine Schichtdicke von unter 20 und vorzugsweise unter 10 µm aufweist.

13. Verfahren zur Herstellung einer Polyurethanschicht nach Anspruch 2, **dadurch gekennzeichnet**, daß auf einem zuvor mit einem Trennmittel beschichteten Trägermaterial eine dünne Beschichtung auf der Grundlage von Acrylmonomeren oder -präpolymeren oder freie Hydroxylgruppen tragenden Acrylpolymeren oder Isocyanat mit einer Funktionalität von größer als zwei hergestellt wird.
- auf der Beschichtung das Reaktionsgemisch der die Polyurethanschicht bildenden Komponenten aufgetragen, diese Einheit einem Polymerisationszyklus unterworfen und
- die Schicht vom Herstellungsträgermaterial abgelöst wird.

14. Sicherheitsverglasung, **dadurch gekennzeichnet**, daß sie eine Polyurethanschicht als Außenschicht nach einem der Ansprüche 1 bis 12 umfaßt.
